# EUROPEAN PATENT APPLICATION

(11) **EP 2 500 791 A1**
(43) Date of publication of application: **19.09.2012**
(21) Application number: 12159146.5
(22) Date of filing: 13.03.2012
(51) Int. Cl.: G05B 19/418, G05B 19/042, G05B 17/02

(54) **System and method of simulating input/output modules in a control system**

(30) Priority: 18.03.2011 US 201113051295
(71) Applicant: General Electric Company, Schenectady, NY 12345 (US)
(72) Inventor: Mutyalapati, Rajaneesh Krishna, 500081 Hyderabad (IN); Duvvuri, Muralidhar Venkata Subrahmanya, 500081 Hyderabad (IN); Mckinley, Marc Harold, Salem, VA Virginia 24153-6422 (US); Sahoo, Manas Ranjan, 500081 Hyderabad (IN)
(74) Representative: Picker, Madeline Margaret

(57) **Abstract**

A simulation system includes a simulation interface (102) and a virtual controller (100) coupled to the simulation interface. The virtual controller includes an application layer (104) that receives application layer inputs and provides outputs to the simulation interface and an input/output (I/O) layer (108) coupled to the system model (114) and the application layer. The I/O layer includes one or more I/O module models (110) that receive the system model outputs and creates the application layer inputs in the same or similar manner as an I/O module in the system being simulated.

## Description

### BACKGROUND OF THE INVENTION

The subject matter disclosed herein relates to control systems and, in particular, to simulating input/output (I/O) modules in a control system.

Computerized control systems are used to control the operations of any number of different types of systems. For example, control systems can be utilized to control the operation of single machine or a complex system that includes several machines.

In some cases, the control system is completely automated and require little to no user interaction. In other cases, the control system requires varying degrees of user interaction. In either case, some level of system simulation may be desirable in order to provide training to users of the control system on how to interact with it or to test new control algorithms.

The simulation typically includes a human-machine interface that is driven by application code ported from a control module of a control system to a personal or other computer. To complete the simulation, a software-based model, which may be rooted in first principle physics, applied statistics, empirical or data driven techniques, or a combination thereof, of the machine or other device being controlled is created to feed inputs to the application code. The simulation of the control module on a personal or other computer is sometimes referred to as a "virtual controller". The virtual controller executes blockware and application code.

At present, the model provides inputs that represent the output of I/O packs or cards (referred to generally herein as I/O modules) present in the control system being simulated. In some cases, the output of these I/O modules represents a processed representation of the multiple inputs. For example, in a triple modular redundant (TMR) system the I/O module can receive three parameter (e.g., temperature) readings from three different sensors and, based on a voting procedure, select one of the inputs as the output, or form an output that is a blending of the inputs. Current virtual controllers do not include any way to model the operation of these I/O modules and, as such, certain training or testing abilities of system simulations are not being fulfilled.

### BRIEF DESCRIPTION OF THE INVENTION

According to one aspect of the invention, a simulation system that includes a simulation interface, a system model that models the operation of a system being simulated and provides system model outputs, and a virtual controller coupled to the simulation interface is disclosed. The virtual controller of this aspect includes an application layer that receives application layer inputs and provides outputs to the simulation interface and an input/output (I/O) layer coupled to the system model and the application layer. The I/O layer includes one or more I/O module models that receive the system model outputs and create the application layer inputs in the same or similar manner as an I/O module in the system being simulated.

According to another aspect of the invention, a method of simulating a system is disclosed. The method includes creating, on a computing device, a system model that creates values representing measurement made by sensors in the system; creating an input/output (I/O) layer that includes at least a portion of operational code utilized by an I/O module in the system; receiving the values from the system model at the I/O layer; converting the values received from the system model to I/O layer outputs according to the operational code; and providing the I/O layer outputs to an application layer that includes a control algorithm for the system.

According to yet another aspect of the invention, an article of manufacture comprising non-transitory storage media storing computer readable program code for causing a simulation of a system is disclosed. The computer readable program code comprises computer readable instruction for causing a computer to perform a method including: storing a system model that creates values representing measurement made by sensors in the system; creating an input/output (I/O) layer that includes at least a portion of operational code utilized by an I/O module in the system; receiving the values from the system model at the I/O layer; converting the values received from the system model to I/O layer outputs according to the operational code; and providing the I/O layer outputs to an application layer that includes a control algorithm for the system.

These and other advantages and features will become more apparent from the following description taken in conjunction with the drawings.

### BRIEF DESCRIPTION OF THE DRAWINGS

The subject matter, which is regarded as the invention, is particularly pointed out and distinctly claimed in the claims at the conclusion of the specification. The foregoing and other features, and advantages of the invention are apparent from the following detailed description taken in conjunction with the accompanying drawings in which:
FIG. 1 illustrates a system for providing a simulation according to one embodiment;
FIG 2 illustrates a portion of a virtual controller that forms part of the system shown in FIG. 1 according to one embodiment;
FIG 3 is a flow chart showing a method of simulating a control system according to one embodiment.

The detailed description explains embodiments of the invention, together with advantages and features, by way of example with reference to the drawings.

### DETAILED DESCRIPTION OF EMBODIMENTS OF THE INVENTION

Embodiments of the present invention have the technical advantage of allowing for the simulation of I/O modules in a virtual controller. Such a simulation can enhance training of operators and the development, validation and verification of the control system.

In some cases, in order to simulate I/O modules, a "hardware-in-the-loop (HWTL)" configuration was required. In an HTWL configuration the actual controller was used instead of the virtual controller. Simulating a system in a HWTL configuration can be expensive and time consuming. In addition, the complexity, from the perspective of failure modes, and expense of developing an operator training simulator based on a HWTL configuration must be absorbed by the end-user. Such a result is less than desirable in the simulation industry. It shall be understood that it is relatively commonplace to simulate the actual data received from the I/O modules. What is missing, however, is the ability to simulate the I/O modules themselves. As such, simulations that include information about the failure modes and voting procedures amongst I/O modules have not been effectively simulated.

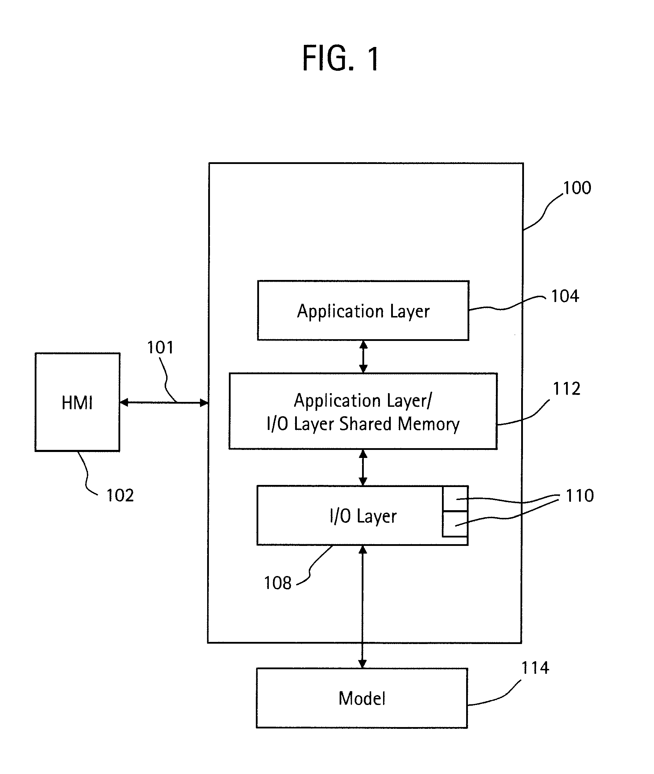

Referring now to FIG. 1, a virtual controller 100 is illustrated coupled to a simulation interface 102. The simulation interface 102 may also be referred to herein as a human machine interface (HMI) and communicates with the virtual controller 100 via a communication link 101. The communication link 101 can be an Ethernet connection or any other type of electronic communication medium. Specifically, the communication link can be selected from a communication medium that supports one or both of the so-called plant data highway (PDH) or the unit data highway (UDH).

The simulation interface 102 provides information received from the virtual controller 100 to a user and can also receive inputs from the user and provide them to the virtual controller 100. As such, the simulation interface 102 can provide a location through which a user can interact with a simulation being created by the virtual controller 100. The virtual controller 100 and the simulation interface 102 can be provided on a single computing device or be wholly or partially separated and distributed over two or more computing devices.

The virtual controller 100 can be programmed to simulate any number of different types of systems or machines. For example, the virtual controller 100 can be used to simulate the operation of a turbine (gas or steam) used in electrical power generation. Regardless of the particular type of system or machine controlled by the control system being simulated, the virtual controller 100 includes an application layer 104. The application layer 104 includes software that operates in a functionally similar (or the same) manner as the control software/hardware in the control system being simulated. Such software or hardware shall be referred to herein as an "operational algorithm."

In the case that the application layer 104 is formed in software, the software can simply be ported from the control system to the application layer 104. The application layer 104 receives inputs that are in the form it expects, applies the logic programmed into it (e.g., the operational algorithm) to the inputs and creates outputs that are provided to the simulation interface 102.

The virtual controller 100 illustrated in FIG. 1 also includes an I/O layer 108. The I/O layer 108 includes one or more I/O module models 110a, 110b, ... 110n. Each I/O module model 110 represents an I/O module in the system being simulated. One or more of the I/O module models 110 include software that simulates the operation of the I/O module it represents. To that end, the I/O module models 110 include, in one embodiment, one or more of: I/O operational code, a sequence of events detector, and a diagnostic detector to examine possible 1/O module failure modes.

Coupled to and accessible by both the I/O layer 108 and the application layer 104 is a shared memory 112. The I/O layer 108 can be configured to write data to and read data from the shared memory 112. Similarly, the application layer 104 can also be configured to write data to and read data from the shared memory unit 112. The shared memory 112 can be a separate memory unit, a portion of a larger memory unit or distributed across various memory locations in one or several computing devices. Regardless of how configured, the shared memory 112 provides a location for the I/O layer 108 and the application layer 104 to exchange information.

In one embodiment, the virtual controller 100 is coupled to, receives information from and provides information to a system model 114. The system model 114 can include an application program interface (API) that allows for such communications. The system model 114 can be implemented in software hardware, or a combination thereof. The system model 114 provides inputs used by the application layer 104 to simulate the operation of a controlled system. The system model 114 generates "measured" values that are used by the application layer 104 to present the simulation to the HMI 102. In prior systems, the system model 114 was directly coupled to the application layer 104 and provided, for example, values representing digital (or possibly, analog) values received from an I/O module directly to the application layer 104

In contrast, the system model 114 illustrated in FIG. 1 provides values representing either voltages or currents to the I/O layer 108. The values are routed to a corresponding I/O module model 110. The I/O module model 110 is configured to convert the received value into a digital representation is the same or similar manner as an actual I/O module would. As such, the operational code for an I/O module model 110 can be copied or ported, in one embodiment, from an actual I/O module into the I/O layer 108. Of course, the I/O module model 110 need not include the entirety of the operational code or parameters from the I/O module it represents. In one embodiment the I/O module model 110 is selected from a database that includes a model of the particular type of I/O module being simulated. It shall be understood that both the system model 114 and the virtual controller 100 can be operated on the same or different computing devices.

The output the I/O module model 110 is provided to the shared memory unit 112. The application layer 104 can interact with the values written to the shared memory 112 in the same manner as if it was received directly from the system model 114. The output provided to the shared memory 112 can include additional information that was not previously provided to the application layer 104. For example, the I/O module model 110 can also write diagnostic alarm information about itself to the shared memory 112.

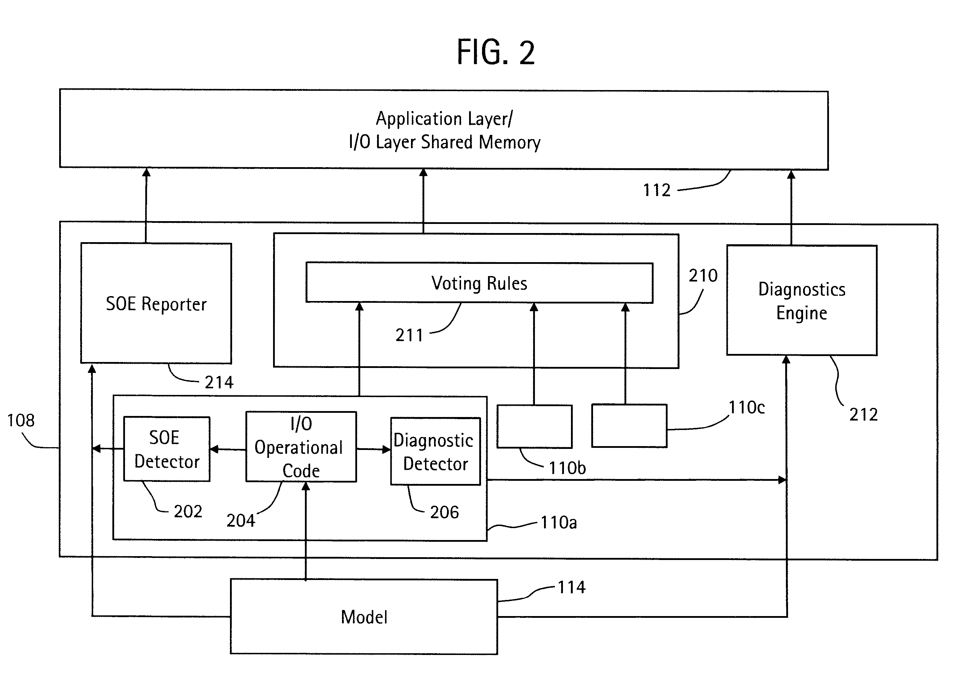

FIG. 2 illustrates an I/O layer 108 coupled between a system model 114 and a shared memory 112. The illustrated I/O layer 108 includes I/O module model 110a, 110b and 110c. Of course, the I/O layer 108 can include any number of I/O module models 110 that are the same as each other, that are different from each other or that are some combination thereof. For simplicity, only I/O module model 110a is described herein. However, it shall be assumed that other I/O module models (e.g., 110b, 110c) operate in the same or a similar manner. Regardless, the As described above, I/O module model 110 includes operational code for an I/O module in the system being simulated.

In FIG. 2, the I/O module model 110 serves to convert a representation of a sensor value received from the system model 114 to an I/O module output format. For example, the system model 114 can provide a value that represents an analog voltage or current to the I/O module model 110. The I/O module model 110 converts the received value into an output in a format that is expected by the application layer 104 (FIG. 1) by applying I/O operational code 204 to the value and writes the result to the shared memory 112.

In some cases, a parameter of the system or machine being simulated is measured by a plurality of sensors. Each of these sensors provides outputs to a separate I/O module. For example, three different I/O modules can receive three temperature values from three different temperature sensors measuring the temperature in a single location. Such a configuration, as described above, is referred to as triple modular redundant (TMR). In such a case, the I/O layer 108 can include voting rules 211 used to select one of the values, averages them in a weighted or un-weighted manner, or otherwise utilizes one or more of the received values to create an output value. In the prior art, these voting rules were not simulated. Rather, just the output of the I/O module was simulated. As such, in one embodiment, the I/O layer 108 includes a voting controller 210 configured to receive two or more input values from two or more I/O module models 110a, 110b, 110c. Of course, the exact configuration of the I/O module model 110 depends on the I/O module being simulated. The voting controller 210 receives the input values from I/O module models 110a, 110b, 110c and is configured to implement the voting procedures as defined in voting rules 211. The voting controller 210 can provide the voted value and, optionally, all of the received values to the shared memory 112. In this manner, the shared memory 112 can be provided with more information about the operation of the I/O module simulated by the I/O module model 110. That is, rather than a single voted output value, all the received values and the voted value can be made available to the application layer 104. It shall be understood that the I/O module model 110 and the voting controller 212 can provide information to the application layer 104 in other manners if required.

In one embodiment, one or more of the I/O model modules 110 are connected to a diagnostics engine 212. The diagnostics engine 212 is be configured to perform some or all of the diagnostic tests that the I/O module being simulated performs. For example, the diagnostics engine 212 can monitor the values provided by I/O module models 110a, 110b, 110c and determine if those values indicate, for example, that one of the sensors is not functioning properly. Of course, the diagnostic engine 212 could perform any other diagnostic testing based on information received from the system model 114. The results of the diagnostics tests are provided to the shared memory 112.

The I/O model modules 110a, 110b, 110c can also include a diagnostic detector 206 that determines whether the particular I/O model module is functioning properly. In such cases, the diagnostics engine 212 can received an indication from the system model 114 or the I/O model modules 110a, 100b, 110c that indicates that the I/O module has failed. In such a case, the diagnostic engine 212 can provide outputs indicative of such a failure to the shared memory 112.

The I/O module model 110 also includes a sequence of events (SOE) detector 202 connected to the operational code 204. This SOE detector is coupled toa sequence-of-events (SOE) reporter 214 illustrated as being coupled to the SOE detector 202 and the system model 114. Of course, the SOE reporter 214 can be a freestanding element not coupled to either or both of the sensor receiving model 202 and the system model 114. In general, SOE refers to the digital state changes at the input and output locations of the I/O module being simulated. To that end, in one embodiment, the SOE detector 202 and the SOE reporter 214 timestamp and record the digital inputs and outputs of the I/O module model 110 and stores the values and their associated time stamps in the shared memory 112 as an SOE log. This information can be useful, for example, in determining the cause of a system failure or of a failed diagnostic test performed by the diagnostic engine 212.

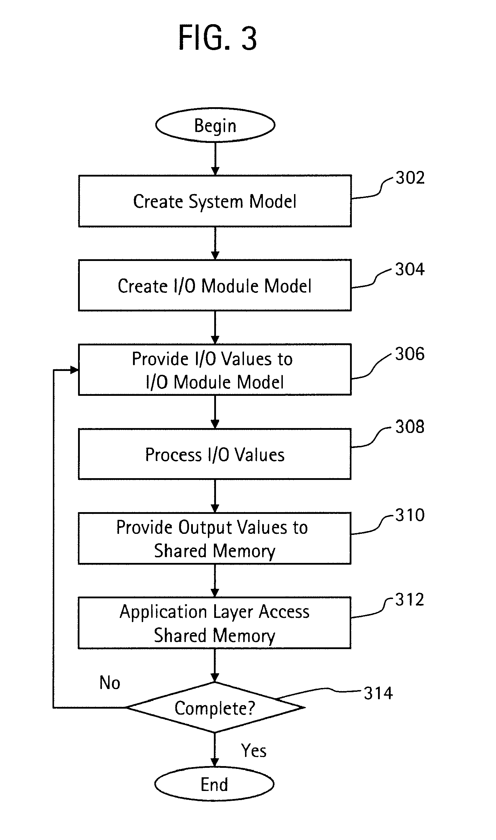

FIG. 3 is a flow diagram illustrating a method of operating a simulation according to one embodiment. At block 302 a system model is created. The system model creation can include creating a simulation of a system that is controlled by a control system. To that end, the system model can be configured to provide, in a real time or incremental time basis, a series of simulated values that represent values from sensors or other elements of the system. In prior simulations, the values were typically provided directly to the application layer that was running the application code for the controller. In contrast, at least I/O values that would be provided to I/O modules in the controlled system are provided from the system model to one or more I/O module models at block 306. It shall be understood that before the values can be provided to the I/O module models, the I/O module modules are created at block 304. In one embodiment, and as described above, creation of the I/O module models can include copying (either exactly or generally) the configuration settings, base load and firmware of configured I/O modules in the system being simulated into the I/O layer 108 (FIG. 2).

At block 308, the received values are processed by the I/O module model. The processing performed by the I/O module model is described in detail above but, generally, can include converting the values, SOE reporting, and diagnostic testing.

At block 310 the outputs of the I/O module model are provided to a shared memory where they can be accessed by an application layer at block 312. In the event that the simulation is not halted (block 314) processing returns to block 306. Of course, as one of ordinary skill in the art will realize, the method can also include receiving inputs from an HMI and those inputs can affect one or both of the operation of the system model or the application layer.

As disclosed herein, embodiments of the systems shown in FIGs. 1 and 2 can include machine-readable instructions stored on machine readable media (for example, a hard disk) for performing methods or creating systems as disclosed herein. In one nonlimiting embodiment, machine (computer) readable media is non-transitory. As discussed herein, the instructions are referred to as "software". The software may be produced using software development tools as are known in the art. The software may include various tools and features for providing user interaction capabilities as are known in the art.

In some embodiments, the software is provided as an overlay to another program. For example, the software can be provided as an "add-in" to an application (or operating system). In one embodiment, the add-in is provided to a control system simulation system. In such an embodiment, the HMI according to the present invention displays simulated rather than actual data. Note that the term "add-in" generally refers to supplemental program code as is known in the art. In such embodiments, the software may replace structures or objects of the application or operating system with which it cooperates.

As will be appreciated by one skilled in the art, aspects of the present invention may be embodied as a system, method or computer program product. Accordingly, aspects of the present invention may take the form of an entirely hardware embodiment, an entirely software embodiment (including firmware, resident software, micro-code, etc.) or an embodiment combining software and hardware aspects that may all generally be referred to herein as a "circuit," "module" or "system." Furthermore, aspects of the present invention may take the form of a computer program product embodied in one or more computer readable medium(s) having computer readable program code embodied thereon.

The computer readable medium is, in one embodiment, a non-transitory computer readable storage medium. A computer readable storage medium may be, for example, but not limited to, an electronic, magnetic, optical, electromagnetic, infrared, or semiconductor system, apparatus, or device, or any suitable combination of the foregoing. More specific examples (a non-exhaustive list) of the computer readable storage medium would include the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. In the context of this document, a computer readable storage medium may be any tangible medium that can contain, or store a program for use by or in connection with an instruction execution system, apparatus, or device.

While the invention has been described in detail in connection with only a limited number of embodiments, it should be readily understood that the invention is not limited to such disclosed embodiments. Rather, the invention can be modified to incorporate any number of variations, alterations, substitutions or equivalent arrangements not heretofore described, but which are commensurate with the spirit and scope of the invention. Additionally, while various embodiments of the invention have been described, it is to be understood that aspects of the invention may include only some of the described embodiments. Accordingly, the invention is not to be seen as limited by the foregoing description, but is only limited by the scope of the appended claims.

## Claims

1. A simulation system for simulating input/output (I/O) modules in a control system simulation comprising:
a simulation interface (102);
a system model (114) that models the operation of a system being simulated and provides system model outputs; and
a virtual controller (100) coupled to the simulation interface (102), the virtual controller (100) including:
an application layer (104) that receives application layer (104) inputs and provides outputs to the simulation interface (102); and
an (I/O) layer (108) coupled to the system model and the application layer (104), the I/O layer (108) including one or more I/O module models (110) that receive the system model outputs and create the application layer (104) inputs in the same or similar manner as an I/O module in the system being simulated.

2. The simulation system of claim 1, wherein the virtual controller (100) further includes:
a shared memory (112) coupled between the I/O layer (108) and the application layer (104), the shared memory (112) storing the application layer (104) inputs.

3. The simulation system of claim 2, wherein the I/O layer (108) receives multiple values of a single parameter provided to one or more of the I/O module models (110) and includes a voting controller (210) that creates a single application layer (104) input from the multiple values.

4. The simulation system of claim 3, wherein the single application input is written by the I/O layer (108) to the shared memory (112).

5. The simulation system of claim 4, wherein the multiple values for the one or more of the I/O module models (110) are also written by the I/O layer (108) to the shared memory (112).

6. The simulation system of any one of claims 2 to 5, wherein the I/O layer (108) further includes:
a diagnostic engine (212) that simulates diagnostic tests performed by the I/O modules being simulated and writes the results of the diagnostic tests to the shared memory (112).

7. The simulation system of any one of claims 2 to 6, wherein the I/O layer (108) further includes:
a sequence-of-events (SOE) reporter (214) that timestamps and records the digital inputs and outputs of one or more I/O module models (110) and provides them to the shared memory (112).

8. A method of simulating an input/output (I/O) module contained in a system comprising:
creating, on a computing device, a system model that creates values representing measurement made by sensors in the system;
creating an (I/O) layer (108) that includes at least a portion of operational code utilized by the I/O module;
receiving values from the system model at the I/O layer (108);
converting the values received from the system model to I/O layer outputs according to the operational code (204); and
providing the I/O layer outputs to an application layer (104) that includes a control algorithm for the system.

9. The method of claim 8, wherein the system model provides two or simulated values of a same operational parameter to the I/O layer (108).

10. The method of claim 9, further comprising:
selecting one of the two or more simulated values.

11. The method of claim 9 or claim 10, further comprising:
averaging at least two of the two or more simulated values.

12. The method of any one of claims 8 to 11, further comprising:
recording input and output states of the I/O layer (108); and
associating the input and output states with timetags.

13. The method of claim 12, further comprising:
providing the input and output states and their associated time tags to the application layer (104) as a sequence-of-events (SOE) log.

14. The method of claim 9, 10 or 11, wherein converting includes determining an operational status of the I/O module being simulated based on the values.

15. An article of manufacture comprising non-transitory storage media storing computer readable program code for causing a simulation of an input/output (I/O) module contained in a system, the computer readable program code comprising computer readable instruction for causing a computer to perform a method of any one of claims 8 to 14.
